# EUROPEAN PATENT SPECIFICATION

(11) **EP 2 127 318 B1**
(45) Date of publication and mention of the grant of the patent: **04.06.2014**
(21) Application number: 08708898.5
(22) Date of filing: 12.02.2008
(51) Int. Cl.: H04L 29/06

(54) **METHOD AND SYSTEM FOR ESTABLISHING VOIP COMMUNICATION BY MEANS OF DIGITAL VIDEO BROADCASTING NETWORK**
VERFAHREN UND SYSTEM ZUR HERSTELLUNG VON VOIP-KOMMUNIKATION MITTELS EINES DIGITALEN VIDEOAUSSTRAHLUNGSNETZES
PROCÉDÉ ET SYSTÈME POUR ÉTABLIR UNE COMMUNICATION DE VOIX SUR IP (VOIP) AU MOYEN D'UN RÉSEAU DE DIFFUSION DE VIDÉO NUMÉRIQUE

(30) Priority: 13.02.2007 CN 200710005584
(43) Date of publication of application: 02.12.2009
(73) Proprietor: International Business Machines Corporation, Armonk, NY 10504 (US)
(72) Inventor: YU, Yuan, Beijing 100085 (CN); LIN, Yong Hua, Beijing (CN); WANG, Xiang Dong, Beijing (CN)
(74) Representative: Waldner, Philip
(86) International application number: PCT/EP2008/051659
(87) International publication number: WO 2008/098918

(56) References cited:
- US-A1- 2007 022 200
- SKINNEMOEN H ET AL: "VOIP OVER DVB-RCS WITH QOS AND BANDWIDTH ON DEMAND" IEEE WIRELESS COMMUNICATIONS, IEEE SERVICE CENTER, PISCATAWAY, NJ, US, vol. 12, no. 5, 1 October 2005 (2005-10-01), pages 46-53, XP001235304 ISSN: 1536-1284

## Description

### Technical Field of the Invention

The present invention relates to techniques of establishing VoIP (Voice over IP) communication, and specifically to a method, a system, a terminal, a VoIP server and a digital video broadcasting front-end server for establishing VoIP communication by means of digital video broadcasting network.

### Background of the Invention

With the development of digital TV and IP TV, a digital video broadcasting (DVB)/IP combo set-top-box is provided to enable users to simultaneously enjoy services such as digital cable TV, Video on demand (VoD) and web surfing and so on. One application of the DVB/IP combo set-top-box is for VoIP communications via IP network as a VoIP telephone terminal.

In general, the process of establishing the VoIP communication between the terminals is as follows: a calling terminal sends a call request to a VoIP server to which it belongs, wherein the call request contains an address of a called terminal. If the VoIP server finds that the called terminal is not within its service coverage, it sends the call request via IP network to a VoIP server to which the called terminal belongs. When the call request reaches the VoIP server to which the called terminal belongs, this VoIP server sends the call request to the called terminal. And then, the called terminal generates a response message and sends it back to the calling terminal. Thus, the VoIP communication is established. However, the existing VoIP communication requires that both the calling and the called terminals must be online. If the called terminal is offline, the VoIP communication cannot be established.

Currently, an Internet service provider (ISP) usually provides two kinds of service charge modes, i.e. "monthly fixed charge" mode and "online time based charge" mode. Users of "online time based charge" mode do not always connect the DVB/IP combo set-top-box to the IP network. As a result, when a user's terminal initiates a VoIP call to the DVB/IP combo set-top-box of the user of "online time based charge" mode via the IP network, the user's DVB/IP combo set-top box cannot receive the VoIP call because it is disconnected to the IP network.

Patent document US 2007/022200 discloses a PTT/POC system in which a caller sets up a session with two or more destination terminals. After the session has been setup, a server determines if enough bandwidth is available in a broadcast service channel (DVB). If there is, the session traffic is rerouted over the broadcast channels.

### Summary of the Invention

The present invention is provided to address the above technical problems. Its objectives include providing a method, a terminal, a VoIP server, a digital video broadcasting front-end server and a system for establishing VoIP communication by means of digital video broadcasting network. Even if the terminal such as the DVB/IP combo set-top-box is disconnected to the IP network, the VoIP call can be received so that the VoIP communication can be established. Moreover, the present invention can be implemented conveniently with lower cost.

According to one aspect of the present invention, it is provided that a method for establishing VoIP communication by means of digital video broadcasting network, comprising: a first terminal sending a VoIP call request to a source VoIP server to which the first terminal belongs, the VoIP call request containing an address of a second terminal; the source VoIP server forwarding the VoIP call request to a destination VoIP server to which the second terminal belongs; the first terminal or any one of VoIP servers in a forwarding path from the source VoIP server to the destination VoIP server forwarding the VoIP call request to a digital video broadcasting front-end server; the digital video broadcasting front-end server converting the VoIP call request into a call request modulated in digital video signals and broadcasting it within the digital video broadcasting network.

According to another aspect of the present invention, it is provided that a terminal comprising: a first receiving unit for receiving a call request broadcasted by a digital video broadcasting front-end server and determining whether the terminal is a called terminal based on an address contained in the call request; a second receiving unit for receiving a call request transmitted via IP network; an IP connection enabling controller for enabling an IP connection of the terminal when the terminal is determined as the called terminal and IP. connection status of the terminal is offline to the IP network; and a responding unit for generating a response message to the call request.

According to another aspect of the present invention, it is provided that a VoIP server comprising: a call request receiving unit for receiving a VoIP call request; and a forwarding unit for forwarding the VoID call request to a digital video broadcasting front-end server via I P network.

According to another aspect of the present invention, it is provided that a digital video broadcasting front-end server comprising: a call request receiving unit for receiving a VoIP call request from above VoIP server; a format conversion unit for converting the VoIP call request into a call request modulated in digital video signals; and a broadcasting unit for broadcasting the call request modulated in digital video signals within digital video broadcasting network.

According another aspect of the present invention, it is provided that a system for establishing VoIP communication by means of digital video broadcasting network comprising: at least two above terminals; at least one above VoIP server; and the above digital video broadcasting front-end server; wherein, the terminals, the VoIP server and the digital video broadcasting front-end server execute the above method for establishing VoIP communication by means of digital video broadcasting network.

### Description of the Drawings

Fig. 1 is a flowchart of a method for establishing VoIP communication by means of digital video broadcasting network according to an embodiment of the present invention;
Fig. 2 is a schematic block diagram of a VoIP server according to an embodiment of the present invention;
Fig. 3 is a schematic block diagram of a digital video broadcasting front-end server according to an embodiment of the present invention;
Fig. 4 is a schematic block diagram of a terminal according to an embodiment of the present invention; and
Fig. 5 is a block diagram of a system for establishing VoIP communication by means of digital video broadcasting network according to an embodiment of the present invention.

### Detailed Description of the Invention

It is believed that above and other objectives, features and advantages of the present invention will become more apparent with reference to the following detailed description of the specific embodiments of the present invention taken in conjunction with the drawings.

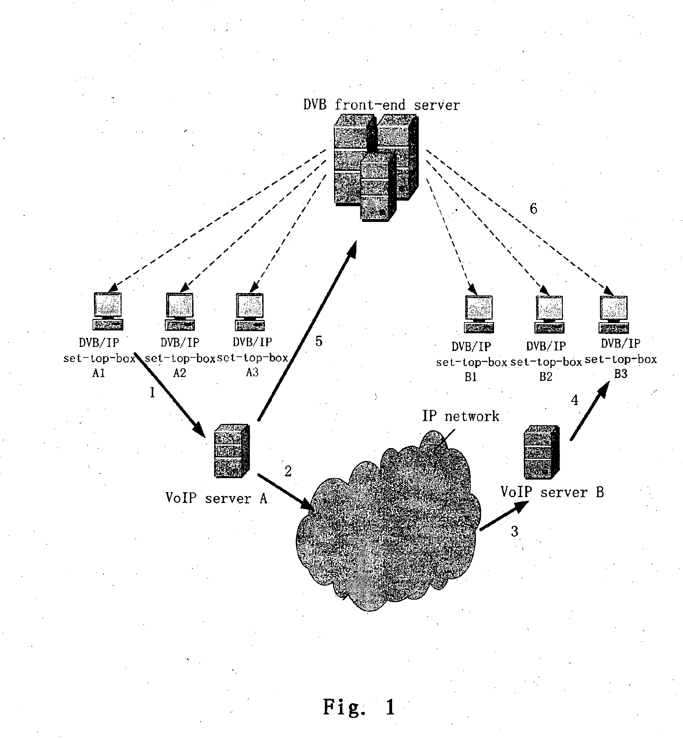

Fig. 1 is a flowchart of a method for establishing VoIP communication by means of digital video broadcasting network according to an embodiment of the present invention. Fig. 1 shows a typical DVB+IP environment.

In the DVB+IP environment shown in Fig. 1, a terminal is a DVB/IP combo set-top-box which can be connected to IP network to receive and send IP messages and which can be connected to a DVB front-end server to receive digital video broadcasting signals.

When the DVB/IP combo set-top-box A1 wants to establish VoIP communication with the DVB/IP combo set-top-box B3, the DVB/IP combo set-top-box A1 firstly sends a VoIP call request to the VoIP server A to which it belongs, as shown by solid arrow I in Fig. 1. The VoIP call request contains an address of the DVB/IP combo set-top-box B3. In another embodiment, the initiating party of the VoIP communication can also be a common IP telephone.

After receiving the call request, the VoIP sever A checks whether the DVB/IP combo set-top-box B3 is within its service coverage based on the address contained in the call request. If the VoIP server A does not provide services to the DVB/IP combo set-top-box B3, the VoIP server A forwards the call request via the IP network to the VoIP server B to which the DVB/IP combo set-top-box B3 belongs, as shown by solid arrows 2 and 3 in Fig. 1.

The VoIP server A also forwards the call request to the DVB front-end server in the digital video network via the IP network, as shown by solid arrow 5 in Fig. 1.

Alternatively, the VoIP server which forwards the VoIP call request to the DVB front end server can also be the VoIP server B, or any one of the VoIP servers in a forwarding path from the VoIP server A to the VoIP server B, or even the DVB/IP combo set-top-box A1 itself. In the later cases, when a certain VoIP server or the set-top-box itself forwards the call request to the DVB front-end server, the other VoIP servers or the set-top-box do not forward the request to the DVB front-end server.

In addition, the VoIP server A can also forward the VoIP call request to the DVB front-end server if it does not receive a response message within a pre-determined period after forwarding the call request to the VoIP server B.

In addition, the VoIP server B can also forward the call request to the DVB front-end server if it has not established an IP connection to the DVB/IP combo set-top-box B3 after receiving the call request.

When the DVB front-end server receives the VoIP call request, it converts the format of the call request to make the call request to be a call request modulated in digital video signals. And then, the DVB front-end server broadcasts the call request modulated in digital video signals to all DVB/IP combo set-top-boxes within the digital video broadcasting network via DVB downlinks, as shown by dashed arrow 6 in Fig. 1.

When the DVB/IP combo set-top-boxes receive the call request modulated in digital video signals, they check whether the address contained in the call request is their own address. If no, the call request is discarded, and if yes, it is indicated that the DVB/IP combo set-top-box which has the same address is the receiver of this call, and the further processing is executed. In this embodiment, the called terminal is the DVB/IP combo set-top-box B3.

Next, the DVB/IP combo set-top-box B3 checks whether it is connected to the IP network (accordingly can be connected to the VoIP server B). If the DVB/IP combo set-top-box B3 is disconnected to the IP network, it enables the connection to the IP network to be connected to the VoIP server B. In addition, the DVB/IP combo set-top-box B3 can also display the corresponding messages on a TV set connected thereto to facilitate the called user to view.

Next, the DVB/IP combo set-top-box B3 generates a response message and sends it back to the VoIP server B. The VoIP server B returns the response message to the VoIP server A via the IP network and the VoIP server A returns it to the DVB/IP combo set-top-box A1. Thus the VoIP voice communication is established between the DVB/IP combo set-top-boxes A1 and B3.

It can be seen from above description that in the method for establishing VoIP communication by means of digital video broadcasting network of this embodiment, the VoIP call request is forwarded via the DVB downlinks. Since the downlinks between the DVB front-end server and the DVB/IP combo set-top-boxes are always connected, it ensures that the VoIP communication between the DVB/IP combo set-top-boxes can be established at any time. Even if the DVB/IP combo set-top-box as the called terminal is disconnected to the IP network, the VoIP call can also be received. In addition, the DVB/IP combo set-top-box which is not connected to the IP network can automatically enable the connection to the IP network to respond to the VoIP call request by receiving the VoIP call request from the DVB front-end server.

In another embodiment, if the VoIP server B finds that the DVB/IP combo set-top-box B3 has been connected to the IP network after receiving the VoIP call request, it sends the call request to the DVB/IP combo set-top-box B3. At that time, the DVB/IP combo set-top-box B3 will receive two call requests, i.e. the broadcasted call request modulated in digital video signals from the DVB front-end server and the VoIP call request forwarded by the VoIP server B. In this case, the DVB/IP combo set-top-box B3 only selects either of the call requests, and then executes the subsequent processing. Preferably, the DVB/IP combo set-top-box B3 selects the VoIP call request.

Further, the DVB/IP combo set-top-box B3 can determine whether the received two call requests are originated from the same terminal, i.e. the DVB/IP combo set-top-box A1. If yes, the DVB/IP combo set-top-box B3 responds to either of the call requests and then executes the subsequent processing. If no, the DVB/IP combo set-top-box B3 selects either of the call requests. Preferably, the VoIP call request from the VoIP server B is selected, and another call request is maintained or discarded.

Further, if the DVB/IP combo set-top-box B3 is busy when receiving the call request, it maintains the selected call request for a pre-determined period. If the DVB/IP combo set-top-box B3 generates a response message within the pre-determined period, the subsequent processing is executed. If the DVB/IP combo set-top-box B3 has not generated any response when the pre-determined period has lapsed, it discards the selected call request and terminates the process of establishing the VoIP communication.

In addition, if the DVB/IP combo set-top-box B3 is busy when receiving the call request, it can discard the received two call requests directly and terminate the process of establishing the VoIP communication.

The further processing after the called terminal receives the call request is described above. The internal resource of the called terminal can be saved.

When the VoIP communication is established between the DVB/IP combo set-top-boxes A1 and B3, the users of the DVB/IP combo set-top-boxes A1 and B3 can have a VoIP voice conversation. When the voice conversation is terminated, the DVB/IP combo set-top-box B3 returns to the IP connection status before the voice conversation, i.e. if the DVB/IP combo set-top-box B3 is disconnected to the IP network before the voice conversion, when the voice conversation is terminated, the DVB/IP combo set-top-box B3 is automatically disconnected to the IP network.

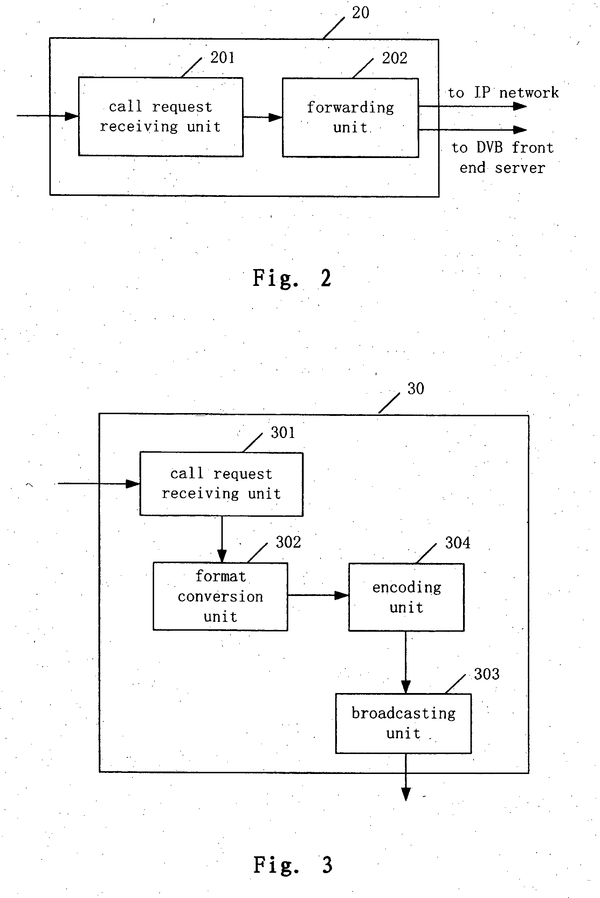

Fig. 2 is a schematic block diagram of a VoIP server 20 according to an embodiment of the present invention. This embodiment is described in details as below in conjunction with the drawing. The VoIP server 20 of this embodiment can be used in a system for establishing VoIP communication by means of digital video broadcasting network described later.

As shown in Fig. 2, the VoIP server 20 comprises: a call request receiving unit 201 which receives a VoIP call request from a terminal; and a forwarding unit 202 for forwarding the VoIP call request to another VoIP server or terminal and a DVB front-end sever via IP network.

In fact, the call request receiving unit 201 is known in the existing VoIP server, and the function of forwarding the call request to another VoIP server or terminal in the forwarding unit 202 is also known in the existing VoIP server. Thus, the VoIP server 20 of this embodiment can be implemented by adding the function of forwarding the call request to the DVB front-end server into the existing VoIP server.
It would be noticed that the VoIP server 20 and its components can be implemented by hardware circuit such as Very Large Scale Integrated Circuit or gate array, semiconductor such as logic chips and transistors, or programmable hardware device such as field programmable gate array, programmable logic device, and by software executed by various types of processors, and by the combination of the above hardware circuit and the software.

It can be seen from above description that the VoIP server of this embodiment adds the function of forwarding the call request to the DVB front end server into the original functions of the VoIP server and can forward the call request via the DVB front-end server when the call request cannot be forwarded to the terminal directly, so that the call request can reach the called terminal reliably.

Fig. 3 is a schematic block diagram of a digital video broadcasting front-end server 30 according to an embodiment of the present invention. This embodiment is described in details as below in conjunction with the drawing. The digital video broadcasting front-end server 30 of this embodiment can be used in a system for establishing VoIP communication by means of digital video broadcasting network described later.

As shown in Fig. 3, the DVB front-end server 30 of this embodiment comprises: a call request receiving unit 301 which receives a VoIP call request from the VoIP server 20 shown in Fig. 2; a format conversion unit 302 which converts the received VoIP call request into a call request modulated in digital video signals; and a broadcasting unit 303 for broadcasting the call request modulated in digital video signals within the digital video broadcast network.

Further, the DVB front-end server 30 of this embodiment comprises an encoding unit 304 which encodes the call request which is modulated in digital video signals and generated by the format conversion unit 302 into the digital video signals to broadcast.

It would be noticed that the DVB front-end server 30 and its components can be implemented by hardware circuit such as Very Large Scale Integrated Circuit or gate array, semiconductor such as logic chips and transistors, or programmable hardware device such as field programmable gate array, programmable logic device, and by software executed by various types of processors, and by the combination of the above hardware circuit and the software.

It can be seen from above description that the DVB front-end server of this embodiment can broadcast the VoIP call request within the digital video broadcast network and accordingly provide another path for forwarding the VoIP call request, so that the VoIP call request can arrive reliably.

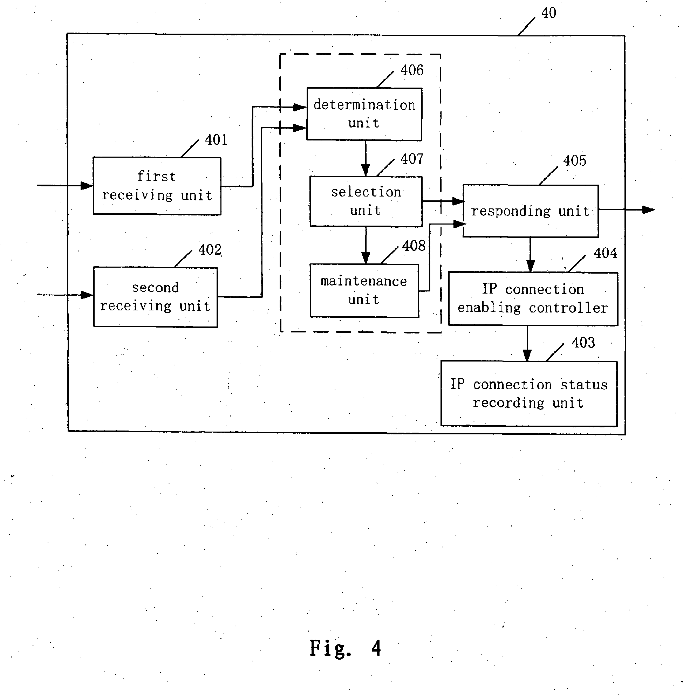

Fig. 4 is a schematic block diagram of a terminal 40 according to an embodiment of the present invention. This embodiment is described in details as below in conjunction with the drawing. The terminal 40 of this embodiment can be used in a system for establishing VoIP communication by means of digital video broadcast network described later.

As shown in Fig. 4, the terminal 40 of this embodiment comprises: a first receiving unit 401 which receives a call request broadcasted by the digital video broadcasting front-end server 30 shown in Fig. 3 and determines whether the terminal 40 is a called terminal based on an address contained in the call request; a second receiving unit 402 for receiving a call request transmitted via the IP network from the VoIP server 20 shown in Fig. 2; an IP connection enabling controller 404 for enabling an IP connection of the terminal 40 when the terminal 40 is determined as the called terminal and the IP connection status of the terminal 40 is offline to the IP network; and a responding unit 405 for generating a response message to the call request and returning it to the VoIP server 30.

Further, the terminal 40 of this embodiment comprises: an IP connection status recording unit 403 which records the IP connection status of the terminal 40; a determination unit 406 for determining whether the call request received by the first receiving unit 401 and the call request received by the second receiving unit 402 are originated from the same terminal; and a selection unit 407 for selecting either of the call requests according to the result of the determination unit 406.

In addition, the terminal 40 of this embodiment also comprises: a maintenance unit 408 for maintaining the call request selected by the selection unit 407 for a pre-determined period when the terminal 40 is busy. If the responding unit 405 has not generated any response message when the pre-determined period has lapsed, the call request would be discarded.

Preferably, the terminal 40 of this embodiment is a digital video broadcasting/IP combo set-top-box.

It is noticed that the terminal 40 and its components can be implemented by hardware circuit such as Very Large Scale Integrated Circuit or gate array, semiconductor such as logic chips and transistors, or programmable hardware device such as field programmable gate array, programmable logic device, and by software executed by various types of processors, and by the combination of the above hardware circuit and the software.

It can be seen from above description that even if the terminal of this embodiment is disconnected to the IP network, the terminal can also receive the VoIP call requests from other terminals in time and automatically enable the connection to the IP network. In addition, the terminal of this embodiment can further deal with the received requests to save the resource of the terminal.

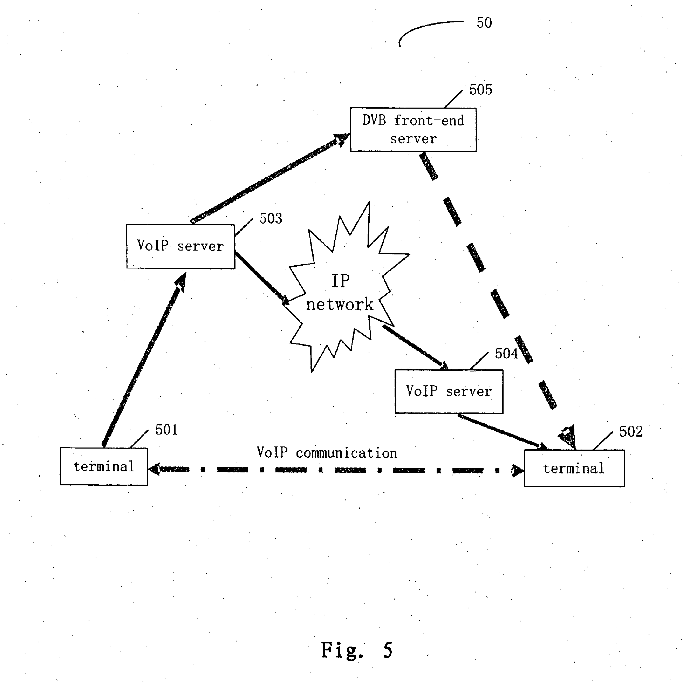

Under the same inventive concept, Fig. 5 is a block diagram of a system for establishing VoIP communication by means of digital video broadcasting network according to an embodiment of the present invention. This embodiment is described in details as below in conjunction with the drawing.

As shown in Fig. 5, the system 500 for establishing VoIP communication by means of digital video broadcasting network of this embodiment comprises: terminals 501 and 502 which are the terminals shown in Fig. 4; VoIP servers 503 and 504 which are the VoIP servers shown in Fig. 2; and the DVB front-end server 505 which is the DVB front-end server shown in Fig. 3. In order to facilitate the description, it is assumed that the VoIP server 503 provides IP services to the terminal 501 and the VoIP server 504 provides IP services to the terminal 502. Of course, the terminals 501 and 502 can also be provided with the services by the same VoIP server.

If the terminal 501 wants to establish VoIP communication with the terminal 502, the terminal 501 sends a VoIP call request to the VoIP server 503. The VoIP call request contains an address of the terminal 502. The VoIP server 503 receives the VoIP call request and finds that a called terminal of the VoIP call request is not within its service coverage, and then it forwards the VoIP call request to the VoIP server 504 via IP network and forwards the VoIP call request to the DVB front-end server 505 via the IP network. The DVB front-end server 505 performs format conversion on the VoIP call request, and generates a call request modulated in digital video signals, and then broadcasts it within the digital video broadcasting network. The terminal 502 receives the call request modulated in digital video signals via DVB downlinks and finds itself is the called terminal. As a result, the terminal 502 enables the connection to the IP network, and generates a response message, and then sends the message to the VoIP server 504. The response message is sent back to the VoIP server 503 from the VoIP server 504 via the IP network and finally arrives at the terminal 501. Thus, the VoIP communication between the terminals 501 and 502 is established.

The system 500 for establishing VoIP communication by means of digital video broadcasting network of this embodiment can operationally implement the method for establishing VoIP communication by means of digital video broadcasting network of the embodiment shown in Fig. 1.

Although the method and system for establishing VoIP communication by means of digital video broadcasting network are described in detail accompanying with the specified embodiments in the above, the present invention is not limited as above. It should be understood for persons skilled in the art that the above embodiments may be varied, replaced or modified within the scope of the present invention.

## Claims

1. A method for establishing VoIP communication by means of digital video broadcasting network, comprising:
a first terminal sending a VoIP call request to a source VoIP server to which the first terminal belongs, the VoIP call request containing an address of a second terminal;
the source VoIP server forwarding the VoIP call request to a destination VoIP server to which the second terminal belongs;
the first terminal or any one of VoIP servers in a forwarding path from the source VoIP server to the destination VoIP server forwarding the VoIP call request to a digital video broadcasting front-end server; and
the digital video broadcasting front-end server converting the VoIP call request into a call request modulated in digital video signals and broadcasting it within the digital video broadcasting network.

2. The method of claim 1, wherein the second terminal receives the call request modulated in digital video signals and determines whether it itself is a called terminal based on the address contained in the received call request; and
if the second terminal determines itself as the called terminal, it establishes a connection to the IP network.

3. The method of claim 1 or 2, wherein the VoIP server which forwards the VoIP call request to the digital video broadcasting front end server is the source VoIP server and optionally wherein if the source VoIP server receives no response message for a pre-determined period after forwarding the VoIP call request to the destination VoIP server, the source VoIP server forwards the VoIP call request to the digital video broadcasting front-end server.

4. The method of claim 1 or 2, wherein the VoIP server which forwards the VoIP call request to the digital video broadcasting front end server is the destination VoIP server and optionally wherein if the destination VoIP server finds that it has not established an IP connection to the second terminal after receiving the VoIP call request, it forwards the VoIP call request to the digital video broadcasting front-end server.

5. The method of any one of claims 1-4, further comprising:
the digital video broadcasting front-end server encoding and modulating the call request into the digital video signals to broadcast.

6. The method of any one of claims 1-5, further comprising:
if the second terminal has been connected to the IP network, the destination VoIP server forwards the VoIP call request to the second terminal; and
the second terminal selects either of the received call requests, and optionally further comprising:
the second terminal determining whether the received two call requests are originated from the same terminal and selecting either of the call request according to the determination result.

7. The method of claim 6, further comprising:
maintaining the selected call request for a pre-determined period if the second terminal is busy; and
the second terminal discarding the selected call request if the second terminal has not generated any response message when the pre-determined period has lapsed.

8. The method of any one of claims 1-7, further comprising: when a voice conversation between the first and second terminals is terminated, the second terminal returning to the IP connection status before the voice conversation and optionally
wherein the second terminal is a digital video broadcasting/IP combo set-top-box.

9. A VoIP server, comprising:
a call request receiving unit for receiving a VoIP call request originated from a first terminal and addressed to a second terminal; and
a forwarding unit for forwarding the VoIP call request to a digital video broadcasting front-end server by means of an IP network.

10. A digital video broadcasting front-end server, comprising:
a call request receiving unit for receiving a VoIP call request from the VoIP server of claim 9, wherein the call request is originated from a first terminal and addressed to a second terminal,
a format conversion unit for converting the VoIP call request into a call request modulated in digital video signals; and
a broadcasting unit for broadcasting the call request modulated in digital video signals within a digital video broadcasting network, and optionally
further comprising:
an encoding unit for encoding the call request generated by the format conversion unit into the digital video signals.

11. A terminal, comprising:
a first receiving unit for receiving a call request broadcasted by a digital video broadcasting front-end server, wherein the call request is originated from a calling terminal, and determining whether the terminal is a called terminal based on an address contained in the call request;
a second receiving unit for receiving a call request transmitted via an IP network;
an IP connection enabling controller for enabling an IP connection of the terminal when the terminal is determined as the called terminal and its IP connection status is offline to the IP network; and
a responding unit for generating a response message to the call request.

12. A terminal of claim 11, further comprising:
a determination unit for determining whether the call request received by the first receiving unit and the call request received by the second receiving unit are originated from the same terminal; and
a selection unit for selecting either of the call request according to the determination result of the determination unit, and optionally
further comprising:
a maintenance unit for maintaining the call request selected by the selection unit for a pre-determined period if the terminal is busy.

13. The terminal of any one of claims 11-12, wherein the terminal is a digital video broadcasting/IP combo set-top-box.

14. A system for establishing VoIP communication by means of digital video broadcasting network, comprising:
at least two terminals of any one of claims 11-13;
at least one VoIP server of claim 9; and
a digital video broadcasting front-end server of claim 10;
wherein, the terminals, the VoIP server and the digital video broadcasting front-end server executes the method for establishing VoIP communication by means of digital video broadcasting network of any one of claims 1-8.

## Patentansprüche

1. Verfahren zum Herstellen einer VoIP-Verbindung über ein digitales Video-Übertragungsnetzwerk, wobei das Verfahren umfasst:
Senden einer VoIP-Anrufanforderung durch ein erstes Terminal an einen Quell-VoIP-Server, zu dem das erste Terminal gehört, wobei die VoIP-Anrufanforderung eine Adresse eines zweiten Terminals enthält;
Weiterleiten der VoIP-Anrufanforderung durch den Quell-VoIP-Server an einen Ziel-VoIP-Server, zu dem das zweite Terminal gehört;
Weiterleiten der VoIP-Anrufanforderung an einen Frontend-Server zur digitalen Video-Übertragung durch das erste Terminal oder irgendeinen der VoIP-Server, der sich in einem Weiterleitungspfad von dem Quell-VoIP-Server zu dem Ziel-VoIP-Server befindet; und
Umwandeln der VoIP-Anrufanforderung durch den Frontend-Server zur digitalen Video-Übertragung in eine Anrufanforderung, die in digitale Videosignale moduliert ist, und Übertragen der Anrufanforderung in dem digitalen Video-Übertragungsnetzwerk.

2. Verfahren nach Anspruch 1, wobei das zweite Terminal die in digitale Videosignale modulierte Anrufanforderung empfängt und auf der Grundlage der Adresse, die in der empfangenen Anrufanforderung enthalten ist, ermittelt, ob es selbst ein angefordertes Terminal ist; und
falls das zweite Terminal feststellt, dass es selbst das angerufene Terminal darstellt, das zweite Terminal eine Verbindung mit dem IP-Netzwerk aufbaut.

3. Verfahren nach Anspruch 1 oder 2, wobei es sich bei dem VoIP-Server, der die VoIP-Anrufanforderung an den Frontend-Server zur digitalen Video-Übertragung weiterleitet, um den Quell-VoIP-Server handelt und wobei optional, wenn der Quell-VoIP-Server für eine vorgegebene Zeitdauer keine Antwortnachricht nach dem Weiterleiten der VoIP-Anrufanforderung an den Ziel-VoIP-Server empfängt, der Quell-VoIP-Server die VoIP-Anrufanforderung an den Frontend-Server zur digitalen Video-Übertragung weiterleitet.

4. Verfahren nach Anspruch 1 oder 2, wobei es sich bei dem VoIP-Server, der die VoIP-Anrufanforderung an den Frontend-Server zur digitalen Video-Übertragung weiterleitet, um den Ziel-VoIP-Server handelt und wobei optional der Ziel-VoIP-Server, wenn er erkennt, dass er nach dem Empfangen der VoIP-Anrufanforderung keine IP-Verbindung mit dem zweiten Terminal hergestellt hat, die VoIP-Anrufanforderung an den Frontend-Server zur digitalen Video-Übertragung weiterleitet.

5. Verfahren nach einem der Ansprüche 1 bis 4, das ferner umfasst:
Codieren und Modulieren der Anrufanforderung durch den Frontend-Server zur digitalen Video-Übertragung in die digitalen Videosignale zur Übertragung.

6. Verfahren nach einem der Ansprüche 1 bis 5, das ferner umfasst:
wenn das zweite Terminal mit dem IP-Netzwerk verbunden wurde, Weiterleiten der VoIP-Anrufanforderung an das zweite Terminal durch den Ziel-VoIP-Server; und
Auswählen einer der empfangenen Anrufanforderungen durch das zweite Terminal, und wobei das Verfahren optional ferner umfasst:
Ermitteln durch das zweite Terminal, ob die beiden empfangenen Anrufanforderungen von demselben Terminal ausgingen, und Auswählen einer der Anrufanforderungen gemäß dem Ergebnis des Ermittelns.

7. Verfahren nach Anspruch 6, das ferner umfasst:
Aufbewahren der ausgewählten Anrufanforderung für eine vorgegebene Zeitdauer, wenn das zweite Terminal beschäftigt ist; und
Verwerfen der ausgewählten Anrufanforderung durch das zweite Terminal, wenn das zweite Terminal keine Antwortnachricht erzeugt hat, nachdem die vorgegebene Zeitdauer verstrichen ist.

8. Verfahren nach einem der Ansprüche 1 bis 7, das ferner umfasst:
wenn eine Sprachkonversation zwischen dem ersten und zweiten Terminal beendet ist, Rückgeben des IP-Verbindungszustands, der vor der Sprachkonversation bestanden hatte, durch das zweite Terminal und wobei es sich bei dem zweiten Terminal optional um eine Set-Top-Box zur digitalen Video-Übertragung oder um eine IP-Combo-Set-Top-Box handelt.

9. VoIP-Server, der umfasst:
eine Anrufanforderungs-Empfangseinheit zum Empfangen einer VoIP-Anrufanforderung, die von einem ersten Terminal ausgeht und an ein zweites Terminal adressiert ist; und
eine Weiterleitungseinheit zum Weiterleiten der VoIP-Anrufanforderung an einen Frontend-Server zur digitalen Video-Übertragung über ein IP-Netzwerk.

10. Frontend-Server zur digitalen Video-Übertragung, der umfasst:
eine Anrufanforderungs-Empfangseinheit zum Empfangen einer VoIP-Anrufanforderung von dem VoIP-Server nach Anspruch 9, wobei die Anrufanforderung von einem ersten Terminal ausgeht und an ein zweites Terminal adressiert ist,
eine Format-Umwandlungseinheit zum Umwandeln der VoIP-Anrufanforderung in eine Anrufanforderung, die in digitale Videosignale moduliert ist; und
eine Übertragungseinheit zum Übertragen der in digitale Videosignale modulierten Anrufanforderung in einem digitalen Video-Übertragungsnetzwerk und wobei der Frontend-Server optional umfasst:
eine Codiereinheit zum Codieren der Anrufanforderung in die digitalen Videosignale, die von der Format-Umwandlungseinheit erzeugt wurde.

11. Terminal, das umfasst:
eine erste Empfangseinheit zum Empfangen einer Anrufanforderung, die von einem Frontend-Server zur digitalen Video-Übertragung übertragen wurde, wobei die Anrufanforderung von einem anrufenden Terminal ausging, und zum Ermitteln auf der Grundlage der in der Anrufanforderung enthaltenen Adresse, ob es sich bei dem Terminal um ein angerufenes Terminal handelt;
eine zweite Empfangseinheit zum Empfangen einer Anrufanforderung, die über ein IP-Netzwerk übertragen wird;
eine IP-Verbindungsaktivierungs-Steuereinheit, damit eine IP-Verbindung des Terminals hergestellt werden kann, wenn festgestellt wird, dass das Terminal angerufen wird und sein IP-Verbindungszustand bezüglich des IP-Netzwerks "offline" ist; und
eine Antworteinheit zum Erzeugen einer Antwortnachricht auf die Anrufanforderung.

12. Terminal nach Anspruch 11, das ferner umfasst:
eine Ermittlungseinheit zum Ermitteln, ob die Anrufanforderung, die von der ersten Empfangseinheit empfangen wurde, und die Anrufanforderung, die von der zweiten Empfangseinheit empfangen wurde, von demselben Terminal ausgingen; und
eine Auswahleinheit zum Auswählen einer der Anrufanforderungen gemäß dem Ergebnis des Ermittelns der Ermittlungseinheit und wobei das Terminal optional ferner umfasst:
eine Aufbewahrungseinheit zum Aufbewahren der Anrufanforderung für eine vorgegebene Zeitdauer, wenn das Terminal beschäftigt ist, wobei die Anrufanforderung von der Auswahleinheit ausgewählt wurde.

13. Terminal nach einem der Ansprüche 11 bis 12, wobei es sich bei dem Terminal um eine Set-Top-Box zur digitalen Video-Übertragung oder eine IP-Combo-Set-Top-Box handelt.

14. System zum Herstellen einer VoIP-Kommunikation durch ein digitales Video-Übertragungsnetzwerk, wobei das System umfasst:
mindestens zwei Terminals nach einem der Ansprüche 11 bis 13;
mindestens einen VoIP-Server nach Anspruch 9; und
einen Frontend-Server zur digitalen Video-Übertragung nach Anspruch 10;
wobei die Terminals, der VoIP-Server und der Frontend-Server zur digitalen Video-Übertragung das Verfahren zum Herstellen der VoIP-Übertragung durch ein digitales Video-Übertragungsnetzwerk nach einem der Ansprüche 1 bis 8 ausführen

## Revendications

1. Procédé d'établissement d'une communication de voix sur IP, VoIP, au moyen d'un réseau de diffusion de vidéo numérique, le procédé comprenant :
un premier terminal envoyant une demande d'appel VoIP vers un serveur VoIP source auquel le premier terminal appartient, la demande d'appel VoIP contenant une adresse d'un second terminal ;
le serveur VoIP source acheminant la demande d'appel VoIP vers un serveur VoIP de destination auquel le second terminal appartient ;
le premier terminal ou un quelconque des serveurs VoIP dans un conduit d'acheminement du serveur VoIP source au serveur VoIP de destination acheminant la demande d'appel VoIP vers un serveur frontal de diffusion de vidéo numérique ; et
le serveur frontal de diffusion de vidéo numérique convertissant la demande d'appel VoIP en une demande d'appel modulée en signaux vidéos numériques et la diffusant à l'intérieur du réseau de diffusion vidéo numérique.

2. Procédé selon la revendication 1, dans lequel le second terminal reçoit la demande d'appel modulée en signaux vidéo numériques et détermine si il est lui-même un terminal appelé sur la base de l'adresse contenue dans la demande d'appel reçue ; et
si le second terminal se détermine lui-même comme le terminal appelé, il établit une connexion vers le réseau IP.

3. Procédé selon les revendications 1 ou 2, dans lequel le serveur VoIP qui achemine la demande d'appel VoIP vers le serveur frontal de diffusion vidéo numérique est le serveur VoIP source et en option dans lequel si le serveur VoIP source ne reçoit aucun message de réponse pendant une période prédéterminée après l'acheminement de la demande d'appel VoIP vers le serveur VoIP de destination, le serveur VoIP source achemine la demande d'appel VoIP vers le serveur frontal de diffusion vidéo numérique.

4. Procédé selon les revendications 1 ou 2, dans lequel le serveur VoIP qui achemine la demande d'appel VoIP vers le serveur frontal de diffusion vidéo numérique est le serveur VoIP de destination et en option dans lequel si le serveur VoIP de destination trouve qu'il n'a pas établi une connexion IP vers le second terminal après la réception de la demande d'appel VoIP, il achemine la demande d'appel VoIP vers le serveur frontal de diffusion vidéo numérique.

5. Procédé selon l'une quelconque des revendications 1 à 4, comprenant en outre :
le server frontal de diffusion vidéo numérique codant et modulant la demande d'appel en signaux vidéo numériques à diffuser.

6. Procédé selon l'une quelconque des revendications 1 à 5, comprenant en outre :
si le second terminal a été connecté au réseau IP, le serveur VoIP de destination achemine la demande d'appel VoIP vers le second terminal ; et
le second terminal sélectionne l'une ou l'autre des demandes d'appel reçues et en option comprenant en outre :
le second terminal déterminant si les deux demandes d'appel reçues émanent du même terminal et sélectionnant l'une ou l'autre des demandes d'appel selon la résultat de la détermination.

7. Procédé selon la revendication 6, comprenant en outre de :
conserver la demande d'appel sélectionnée pendant une période prédéterminée si le second terminal est occupé ; et
rejeter par le second terminal la demande d'appel sélectionnée si le second terminal n'a pas généré de message de réponse quand la période prédéterminée s'est écoulée.

8. Procédé selon l'une quelconque des revendications 1 à 7, comprenant en outre : quand une conversation vocale entre le premier et le second terminal prend fin, retourner par le second terminal au statut de connexion IP d'avant la conversation vocale et en option
dans lequel le second terminal est un décodeur mixte IP/ de diffusion vidéo numérique.

9. Serveur VoIP, comprenant :
une unité de réception de demande d'appel pour recevoir une demande d'appel VoIP émanant d'un premier terminal et adressée à un second terminal, et
une unité d'acheminement pour acheminer la demande d'appel VoIP vers un serveur frontal de diffusion vidéo numérique au moyen d'un réseau IP.

10. Serveur frontal de diffusion vidéo numérique, comprenant :
une unité de réception de demande d'appel pour recevoir une demande d'appel VoIP depuis le serveur VoIP de la revendication 9, dans lequel la demande d'appel émane d'un premier terminal et est adressée à un second terminal ;
une unité de conversion de format pour convertir la demande d'appel VoIP en une demande d'appel modulée en signaux vidéo numériques ; et
une unité de diffusion pour diffuser la demande d'appel modulée en signaux vidéo numériques à l'intérieur d'un réseau de diffusion vidéo numérique, et en option comprenant en outre :
une unité de codage pour coder la demande d'appel générée par l'unité de conversion de format en signaux vidéo numériques.

11. Terminal, comprenant :
une première unité de réception pour recevoir une demande d'appel diffusée par un serveur frontal de diffusion vidéo numérique, dans lequel la demande d'appel émane d'un terminal appelant, et déterminer si le terminal est un terminal appelé sur la base d'une adresse contenue dans la demande d'appel ;
une seconde unité de réception pour recevoir une demande d'appel transmise via un réseau IP ;
un contrôleur permettant une connexion IP pour permettre une connexion IP du terminal quand le terminal est déterminé comme le terminal appelé et son statut de connexion IP est hors ligne du réseau IP ; et
une unité de réponse pour générer un message de réponse vers la demande d'appel.

12. Terminal selon la revendication 11, comprenant en outre :
une unité de détermination pour déterminer si la demande d'appel reçue par la première unité de réception et la demande d'appel reçue par le second unité de réception émanent du même terminal ; et
une unité de sélection pour sélectionner l'une ou l'autre des demandes d'appel selon le résultat de détermination de l'unité de détermination, et en option
comprenant en outre :
une unité de conservation pour conserver la demande d'appel sélectionnée par l'unité de sélection pendant une période prédéterminée si le terminal est occupé.

13. Terminal selon l'une quelconque des revendications 11 à 12, dans lequel le terminal est un décodeur mixte IP/de diffusion vidéo numérique.

14. Système d'établissement d'une communication VoIP au moyen d'un réseau de diffusion vidéo numérique, comprenant :
au moins deux terminaux selon l'une quelconque des revendications 11 à 13 ;
au moins un serveur VoIP selon la revendication 9 ; et
un serveur frontal de diffusion vidéo numérique selon la revendication 10 ;
dans lequel les terminaux, le serveur VoIP et le serveur frontal de diffusion vidéo numérique exécutent le procédé d'établissement d'une communication VoIP au moyen d'un réseau de diffusion vidéo numérique selon une quelconque des revendications 1 à 8.
